# FASCICULE DE BREVET EUROPEEN

(11) **EP 3 094 509 B1**
(45) Date de publication et mention de la délivrance du brevet: **22.05.2019**
(21) Numéro de dépôt: 14809418.8
(22) Date de dépôt: 10.12.2014
(51) Int. Cl.: B60C 15/02, B60B 25/18, B60C 5/16

(54) **ENSEMBLE ROULANT PERFECTIONNÉ**
VERBESSERTE LAUFENDE EINHEIT
IMPROVED RUNNING ASSEMBLY

(30) Priorité: 11.12.2013 FR 1362382
(43) Date de publication de la demande: 23.11.2016
(73) Titulaire: Compagnie Générale des Etablissements Michelin, 63000 Clermont-Ferrand (FR)
(72) Inventeur: AHOUANTO, Michel, 63040 Clermont-Ferrand Cedex 9 (FR); MERINO LOPEZ, José, 63040 Clermont-Ferrand Cedex 9 (FR); PINEAU, Jacky, 63040 Clermont-Ferrand Cedex 9 (FR); TOPIN, Arthur, 63040 Clermont-Ferrand Cedex 9 (FR)
(74) Mandataire: Bauvir, Jacques
(86) Numéro de dépôt international: PCT/EP2014/077179
(87) Numéro de publication internationale: WO 2015/086662

(56) Documents cités:
- FR-A1- 2 491 836
- US-B2- 6 626 217

## Description

### DOMAINE DE L'INVENTION

La présente invention concerne un ensemble roulant formé principalement d'un pneumatique, d'une jante et d'un adaptateur entre la jante et le pneumatique.

### ARRIERE-PLAN

Un pneumatique couramment utilisé de nos jours comporte principalement une bande de roulement destinée à assurer le contact avec le sol, cette bande étant généralement renforcée par une armature de sommet qui est disposée radialement à l'intérieur de la bande de roulement. L'armature de sommet permet de conférer au sommet les rigidités, dans les trois dimensions, nécessaires au roulage du pneumatique. L'armature de sommet limite aussi l'expansion radiale d'une armature de carcasse, généralement composée d'une ou plusieurs nappes d'éléments de renforcement radiaux. Lorsque le pneumatique est monté de façon à pouvoir devenir fonctionnel, il contient un gaz de gonflage, gonflé à une pression nominale. L'armature de carcasse, au cours de l'utilisation du pneumatique des limites raisonnables, se déforme, en statique et en roulage. L'armature de carcasse est généralement ancrée dans chaque bourrelet à un anneau de renforcement. Les bourrelets assurent le contact avec siège et rebord de la jante de montage du pneumatique.

La transmission des efforts mécaniques entre le pneumatique et la jante, efforts résultants du gonflage, de l'écrasement et du roulage du pneumatique, ainsi que l'étanchéité de ce dernier sont assurés par la répartition et la grandeur des forces de contact entre le bourrelet et les siège et rebord de jante. Un bon comportement du pneumatique tant du point de vue de la durée de vie que du point de vue des propriétés conférées au véhicule équipé, un bon rapport qualité-prix de la jante de montage ont conduit à adopter un rapport largeur de jante sur largeur axiale maximale du pneumatique voisin de 0,7. Il est connu que ce rapport n'est qu'un compromis, et qu'un certain nombre de propriétés du pneumatique, par exemple sa tenue de route, sont améliorées par l'usage d'une jante permettant un rapport supérieur ; réciproquement d'autres propriétés peuvent être améliorées, bien évidemment au détriment des premières, par un montage sur une jante étroite, c'est-à-dire conduisant à un rapport, tel que défini ci-dessus, voisin ou inférieur à 0,40.

Le brevet FR 1 267 264, qui cherche à conférer à un pneumatique les propriétés antagonistes que sont le confort, la tenue de route, une faible résistance au roulement et une grande résistance à l'usure, enseigne une ébauche de solution, consistant à donner à l'armature de carcasse une structure s'opposant efficacement à la flexibilité transversale sans nuire à la flexibilité structurelle radiale. Cette structure est obtenue par superposition, dans l'armature de carcasse, à la structure initiale d'éléments de renforcement radiaux d'une structure secondaire d'éléments de renforcement circonférentiels inextensibles. Cette structure secondaire peut, par ailleurs, modifier la forme des flancs du pneumatique, forme conférée par le profil méridien d'équilibre de l'axe moyen de l'armature de carcasse : des éléments de renforcement circonférentiels et inextensibles de diamètre sensiblement égal ou inférieur au diamètre du rebord de jante, et disposés radialement et axialement à l'intérieur des éléments radiaux de l'armature de carcasse permettent à cette armature d'avoir un profil méridien qui tangente quasi-horizontalement l'élément annulaire d'ancrage de l'armature de carcasse.

Ce principe est repris dans le brevet US 3 486 547, et plus particulièrement avec application à une largeur de jante de montage nettement inférieure à la largeur de bande de roulement, le rapport de la largeur de jante sur la largeur axiale maximale du pneumatique étant, dans l'exemple donné, de 0,41.

Bien que présentant des propriétés intéressantes, ce pneumatique n'est pas sans inconvénients, en ce qui concerne la capacité de guidage du véhicule équipé. En effet, l'armature de renforcement destinée à stabiliser la structure secondaire présente, dans la direction circonférentielle une rigidité d'extension très importante et une rigidité de compression nettement plus faible. La différence dans les modules de l'armature de renforcement suivant que l'on travaille en extension ou en compression dans la direction radiale fait en sorte que l'on constate une ovalisation importante de la partie basse extérieure lorsqu'on soumet un tel pneumatique à une charge verticale. Lors de l'application d'un effort transversal sur un tel pneumatique axialement chargé, on constate une réponse non-linéaire du pneumatique suivant que l'effort appliqué a été suffisant ou non pour remettre sous tension la partie mise en compression lors de l'ovalisation.

En vue de remédier à ces inconvénients, le brevet US 6 626 217 propose de dissocier dans le pneumatique ci-dessus, la partie pouvant être considéré comme travaillant réellement comme un pneumatique de la partie pouvant être considéré comme travaillant comme une jante. L'ensemble roulant correspondant est constitué d'un pneumatique, d'une jante étroite dont la largeur est au plus égale à 50 % de la largeur axiale maximale du pneumatique gonflé à sa pression de service, et de deux adaptateurs assurant la jonction entre la jante de montage et les bourrelets du pneumatique, les adaptateurs étant constitués de compositions caoutchouteuses renforcés et déformables élastiquement au moins dans les deux directions radiale et axiale.

Si cet ensemble roulant permet d'améliorer de manière notable le confort et la résistance aux chocs du véhicule équipé, il ne donne pas entière satisfaction par rapport au guidage du véhicule.

La demande WO 92/01576 décrit un ensemble pneumatique comprenant un pneumatique monté sur jante. Un protecteur amovible constitué d'un anneau circulaire de caoutchouc renforcé s'insère entre le bourrelet du pneumatique et la jante. Ce protecteur et destiné à protéger les bourrelets du pneumatique contre le phénomène d'échauffement lors du roulage.

La demande FR 2,491,836 décrit un adaptateur disposé entre la jante et chaque bourrelet d'un pneumatique destiné à en faciliter le montage/démontage.

### RESUME DE L'INVENTION

Un des objectifs de la présente invention est de définir un ensemble roulant ayant une bonne capacité de guidage tout en étant résistant aux chocs de trottoir.

Cet objectif a été atteint, de manière surprenante, en allant à l'encontre de l'enseignement du brevet US 6 626 217 selon lequel la jante doit être étroite.

Plus précisément, cet objectif est atteint par un ensemble roulant comportant :
- un pneumatique comportant deux bourrelets ;
- une jante de montage dont la largeur est supérieure ou égale à 55 % et inférieure ou égale à 80 % de la largeur axiale maximale du pneumatique gonflé à sa pression de service ; et
- au moins un adaptateur qui assure la jonction entre la jante de montage et un bourrelet du pneumatique,
l'adaptateur comportant :
- un bourrelet d'adaptateur assurant l'accrochage de l'adaptateur à la jante de montage;
- un logement destiné à recevoir le bourrelet du pneumatique et positionné axialement à l'extérieur de la jante de montage, le logement comportant un renfort de logement ; et
- un corps de liaison reliant le bourrelet d'adaptateur et le logement, le corps de liaison comportant une armature de renforcement principale.

De préférence, l'ensemble roulant comporte deux adaptateurs qui assurent la jonction entre la jante de montage et les deux bourrelets du pneumatique, mais il peut également ne comporter qu'un seul adaptateur.

Chaque adaptateur est de préférence « déformable élastiquement dans les deux directions, radiale et axiale », au sens qu'il permet dans le sens radial un débattement entre le bourrelet du pneumatique et la jante de montage d'au moins 5 % de la flèche du pneumatique écrasé à charge et pression recommandées, et dans le sens axial un rapprochement du bourrelet de la jante de montage d'une valeur au moins égale à 15 mm à pression nulle, ces déformations étant annulées si l'on supprime les contraintes ou forces qui en sont la cause. A noter que la déformation radiale doit pouvoir intervenir lors de l'usage du pneumatique gonflé à pression nominale, alors que la déformation axiale n'est pas souhaitable en fonctionnement normal du pneumatique gonflé à pression nominale.

Dans l'adaptateur selon l'invention, le bourrelet d'adaptateur peut encore être dénommé « extrémité axialement intérieure ». Le bourrelet d'adaptateur est destiné à accrocher l'adaptateur sur le haut de crochet de jante d'une jante, tout ceci est fait classiquement par le bourrelet d'un pneumatique. Le logement de l'adaptateur destiné à recevoir le bourrelet du pneumatique, et comportant un renfort de logement peut encore être dénommé « extrémité axialement extérieure ». Ce logement reçoit le bourrelet du pneumatique tout comme le fait classiquement le haut de crochet de jante d'une jante.

La jante de montage peut être de différentes sortes : Elle peut notamment avoir une gorge de montage tournée vers l'intérieur de l'ensemble, la gorge de montage étant prolongée axialement à l'extérieur par des sièges tronconiques ou plats, les sièges tronconiques étant eux-mêmes prolongés axialement à l'extérieur et radialement vers l'intérieur par des rebords de jante à bords recourbés, la jante recevant les bourrelets de l'adaptateur par l'intérieur.

La jante est de préférence constituée en un matériau choisi parmi l'acier ou les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales ou parmi toutes combinaisons de matériaux.

De préférence, les matériaux composites à base de fibres comprennent des fibres ayant une longueur supérieure ou égale à 5mm.

La matrice à base de composés thermodurcissables est choisie parmi les résines époxy, le vinylester, les polyesters insaturés, le cyanate ester, le bismaléimide, les résines acryliques, les résines phénoliques, les polyuréthanes et leur combinaison.

La matrice à base de composés thermoplastiques est choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

La présence d'une gorge de montage peut s'avérer ne pas être indispensable ; les deux sièges peuvent alors être axialement et radialement prolongés vers l'intérieur par deux disques radiaux joints par boulons. Les deux sièges peuvent être aussi prolongés axialement vers l'intérieur par deux parties plates, elles-mêmes prolongées axialement et radialement par deux disques annulaires radiaux, axialement espacés et permettant la fixation d'un plateau serre-bourrelets pouvant compléter la jante et pouvant éventuellement servir d'appui de soutien de la bande de roulement dans le cas d'un roulage du pneumatique à pression faible voire nulle, le plateau étant composé circonférentiellement de plusieurs parties indépendantes.

La jante de montage peut aussi être du type jante à rebords dirigés radialement vers l'intérieur, tel que décrit et montré dans le brevet FR 2 610 872, les bourrelets du pneumatique venant se louer sur les sièges de jante par l'intérieur.

De même, la jante de montage peut comporter un fond de jante plat, le fond de jante étant, d'un côté axial de la jante, prolongé par un siège conique qui est lui-même prolongé par un cercle ou rebord de jante, le siège conique et le rebord de jante étant fixés de ce côté axial, le fond de jante étant, du côté axialement opposé, complété d'une part par une pièce mobile, composée d'un rebord et d'un anneau conique et pouvant être enfilée sur le fond de jante, d'autre part par un anneau de verrouillage pour bloquer la pièce mobile sur le fond de jante, et un joint torique assurant l'étanchéité de l'ensemble.

Le renfort de logement peut notamment être réalisé sous forme d'un élément métallique (par exemple, en acier) dont une première partie est réalisée de manière à former un siège pour le pneumatique cette première partie pouvant être éventuellement prolongée axialement à l'extérieur par une deuxième partie faisant office de « rebord de jante ». Ce rebord peut avoir une hauteur faible et une forme usuelle, en particulier recourbée à son extrémité. Le renfort de logement est de préférence enrobé dans une composition caoutchouteuse. Mais il est également possible de réaliser le renfort de logement dans un matériau nylon, PET ou aramide, ou encore dans une matrice en résine (époxy) pourvue de fibres de renforcement en rayonne, aramide, PET, nylon, fibres de verre, de carbone ou de basalte, PEN ou PVA.

L'armature de renforcement principale peut être réalisée dans l'un des matériaux connus de la personne du métier pour la confection des armatures de carcasse de pneumatiques et ayant un module supérieur à 4 GPa. Par « module » on entend ici le module en extension, tel qu'il est extrait d'une courbe force-allongement, obtenue d'une manière bien connue de la personne du métier, à l'aide d'une machine de traction « INSTRON » (voir aussi la norme ASTM D 885-06). Les échantillons testés subissent une traction sur une longueur initiale L0 (en mm) à une vitesse nominale de L0 mm/min, sous une pré-tension standard de 0.5 cN/tex (moyenne sur au moins 10 mesures). Ensuite, on détermine le module à l'allongement à 2% à partir de la courbe force-allongement. Il est notamment possible d'utiliser des câbles métalliques (par exemple, en acier) ou des câbles textiles (rayonne, aramide, polyéthylène, nylon, fibres de verre, de carbone ou de basalte, PEN ou PVA). Dans le cas d'éléments de renforcement métalliques, on détermine le module d'allongement selon la norme ISO 6892.

Le corps de liaison permet la déformation au moins dans les deux directions radiale et axiale, et créé la liaison proprement dite entre le bourrelet d'adaptateur et le logement avec son renfort de logement. La constitution du bourrelet d'adaptateur est fonction du système d'accrochage de la jante de montage, mais comprend principalement un anneau circonférentiel d'ancrage pouvant être un simple anneau de composition caoutchouteuse renforcé ou non, une tringle ou un empilement d'éléments de renforcement orientés circonférentiellement. Autour de cet anneau d'ancrage et par retournement, ou entre les éléments de renforcement de l'anneau et par serrage, est ancrée l'armature de renforcement de l'adaptateur. L'armature peut être formée des mêmes constituants que ceux utilisés pour une armature de carcasse connue de pneumatique, c'est-à-dire formée d'une ou plusieurs nappes d'éléments de renforcement radiaux ou croisés d'une nappe à la suivante en faisant avec la direction circonférentielle du pneumatique un angle donné. Ces éléments de renforcement peuvent être textiles et/ou métalliques et/ou plastiques, sous forme de monofilaments et/ou de câbles et/ou de lames.

Parmi les élastomères pouvant être utilisés dans la confection de l' anneau circonférentiel d'ancrage, on liste, en premier lieu, les caoutchoucs réticulables par des réactions chimiques de vulcanisation par des ponts soufre, par des liaisons carbone-carbone créées par l'action de peroxydes ou de rayonnements ionisants, par d'autres chaînes d'atomes spécifiques de la molécule de l'élastomère, en second lieu, les élastomères thermoplastiques (TPE) où la partie déformable élastiquement forment un réseau entre des régions « dures » peu déformables dont la cohésion est le fruit de liaisons physiques (cristallites ou régions amorphes au-dessus de leur température de transition vitreuse), ensuite les élastomères non thermoplastiques et enfin les résines thermodurcissables.

Selon un mode de réalisation particulier, l'armature de renforcement principale de l'adaptateur comporte au moins une nappe d'éléments de renforcement radiaux.

Alternativement, l'armature de renforcement principale de l'adaptateur peut comporter au moins deux nappes d'éléments de renforcement, parallèles entre eux dans chaque nappe et croisés d'une nappe à la suivante en faisant avec la direction circonférentielle de l'ensemble un angle pouvant être compris entre 15 et 85°.

L'armature de renforcement peut notamment être ancrée dans le bourrelet d'adaptateur par enroulement autour d'un anneau circonférentiel d'ancrage, de manière à former un retournement.

Alternativement, elle peut être ancrée dans le bourrelet d'adaptateur par serrage entre les éléments de renforcement circonférentiels d'un anneau circonférentiel d'ancrage.

Selon un mode de réalisation particulier, la jante de montage comporte un siège tronconique, le bourrelet de l'adaptateur comporte un anneau de renforcement ayant une face tronconique ; et l'armature de renforcement de l'adaptateur et son retournement sont enserrés entre le siège tronconique de la jante de montage et la face tronconique de l'anneau de renforcement du bourrelet de l'adaptateur.

Selon un autre mode de réalisation particulier, le renfort de logement comporte un rebord et l'armature de renforcement principale de l'adaptateur est réunie au renfort de logement de l'adaptateur par collage sur une face radialement extérieure du logement et axialement à l'intérieur de ce rebord.

Selon un mode de réalisation alternatif, le renfort de logement comporte un rebord ; et l'armature de renforcement principale de l'adaptateur est réunie au renfort de logement de l'adaptateur par enroulement sur l'extrémité radialement supérieure de ce rebord.

Selon un mode de réalisation particulier, l'adaptateur comporte au moins une armature additionnelle renforçant le bourrelet de l'adaptateur et/ou le logement de l'adaptateur. Cette armature additionnelle peut notamment comporter au moins une couche d'éléments de renforcement filaires faisant avec la direction circonférentielle un angle compris entre 10 et 45°.

L'invention concerne également un adaptateur pour (c'est-à-dire convenant à) un ensemble roulant selon l'invention.

Bien entendu, il peut être avantageux de combiner plusieurs des modes de réalisation décrits plus haut.

### BREVE DESCRIPTION DES DESSINS

Toutes les figures de ce document sont schématiques.

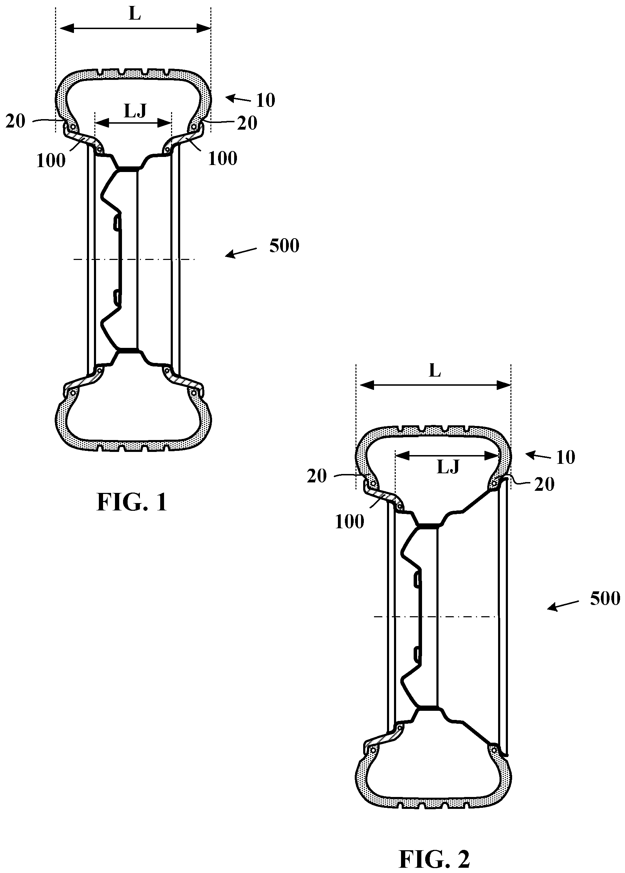

Les figures 1 à 6 représentent chacune, en section radiale, une partie d'un ensemble roulant conforme à l'invention.

### DESCRIPTION DETAILLEE DE L'INVENTION

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial(e) » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale.

Dans le cadre de ce document, l'expression « composition caoutchouteuse » désigne une composition de caoutchouc comportant au moins un élastomère et une charge.

La figure 1 représente - schématiquement - un ensemble roulant selon l'invention. Cet ensemble comprend un pneumatique 10 comportant deux bourrelets 20, une jante de montage 500 dont la largeur LJ est égale à 55 % de la largeur axiale maximale L du pneumatique 10 gonflé à sa pression de service, et deux adaptateurs 100 qui assurent la jonction entre la jante de montage 500 et les deux bourrelets 20 du pneumatique 10.

La figure 2 représente un autre ensemble roulant selon l'invention. A la différence de l'ensemble roulant de la figure 1, cet ensemble roulant ne comprend qu'un seul adaptateur 100. La Largeur LJ est ici égale à 70 % de la largeur axiale maximale L du pneumatique 10 gonflé à sa pression de service.

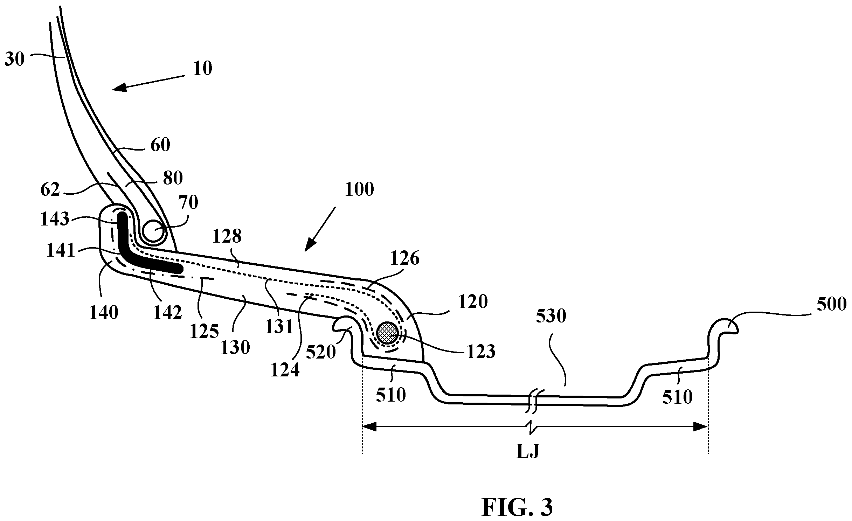

La figure 3 montre une partie d'un ensemble roulant selon l'invention. Cet ensemble comprend un pneumatique 10, un adaptateur 100 et une jante de montage 500. Le pneumatique 10 est, comme connu, formé d'une bande de roulement renforcée par une armature de sommet d'une ou plusieurs couches d'éléments de renforcement (non représentés) et réunie à deux bourrelets de part et d'autre du plan médian par l'intermédiaire de deux flancs 30. Une armature de carcasse 60 renforçant principalement les flancs 30 est ancrée dans chaque bourrelet à au moins une tringle 70, ici de type « tressée », pour former des retournements 62, séparés de la partie principale d'armature de carcasse 60 par un bourrage 80.

Dans le mode de réalisation représenté à la figure 3, la jante de montage 500 est une jante de constitution usuelle avec une gorge 530 dite « de montage » et réunissant, de part et d'autre du plan équatorial, deux sièges de jante 510, dont les génératrices tronconiques font avec l'axe de rotation un angle de 5°, les sièges étant axialement vers l'extérieur prolongés par des rebords de jante 520 dont les bords radialement extérieurs sont fortement recourbés. La particularité de la jante 500 est sa largeur axiale LJ, qui est égale, dans le cas étudié (avec un pneumatique de dimension 225/45 R17), à 140.5 mm, c'est-à-dire égale à 60 % de la largeur axiale maximale du pneumatique 10 monté et gonflé à sa pression recommandée. Entre la jante 500 et le bourrelet du pneumatique 10 est disposé un adaptateur 100 constitué principalement d'un logement 140, réuni à un bourrelet d'adaptateur 120 par un corps de liaison 130. Le renfort de logement 141, métallique dans l'exemple décrit mais qui pourrait être en matériau plastique ou en matériau composite telle qu'une résine renforcée par des fibres de nature quelconque, est formé d'un siège 142 incliné, dans cet exemple et par rapport à l'axe de rotation de l'ensemble, d'un angle de 5°, et prolongé axialement et radialement à l'extérieur par un rebord 143, les dimensions de ces éléments étant normalisées, que ce soit la hauteur du rebord 143 ou la largeur axiale du siège 142. Les parois du renfort de logement 141 sont traitées, par exemple laitonnées dans le cas étudié de renfort métallique, pour permettre une adhésion correcte avec les compositions caoutchouteuses utilisées dans l'armature de renforcement principale 131 et les armatures additionnelles éventuelles de l'adaptateur 100. L'armature de renforcement principale 131 est formée d'une nappe de câbles textiles en polyamide aromatique, parallèles entre eux dans la nappe et radiaux, et cette nappe est d'une part accolée axialement à l'intérieur et radialement à l'extérieur aux parois du renfort de logement 141 et d'autre part ancrée dans chaque bourrelet d'adaptateur 120 à un anneau circonférentiel d'ancrage 123, tel qu'une tringle, pour former un retournement 124. L'armature de renforcement principale 131 est complétée par des armatures additionnelles : dans le bourrelet 120 est disposée une première nappe 126 de renforcement de bourrelet, formée d'un tissu en polyamide aliphatique formé d'éléments de renforcement filaires, parallèles entre eux dans chaque couche de tissu et croisés entre eux ; du côté du renfort de logement 141 de l'adaptateur 100 est disposée une armature additionnelle 125 formée d'un tissu identique au précédent formé de deux couches d'éléments textiles en polyamide aliphatique, parallèles entre eux dans chaque nappe et croisés d'une couche à la suivante en faisant avec la direction circonférentielle un angle de 45°. Cette armature additionnelle 125 recouvre partiellement la paroi axialement intérieure puis l'extrémité supérieure puis la paroi axialement extérieure du rebord 143 et enfin la paroi radialement intérieure du siège 142 pour avoir un bord accolé à la nappe de renforcement principale 131, bord dont l'extrémité est distante du plan médian d'une quantité inférieur à la distance séparant de ce plan l'extrémité axialement intérieure du siège 142. Une couche de composition caoutchouteuse de protection recouvre à l'extérieur du renfort de logement 141, la face radialement intérieure de l'adaptateur 100 et assure la liaison avec le crochet de la jante de montage 500 en entourant les armatures 131 et 126. Sur sa face radialement intérieure, destinée à être en contact avec le gaz de gonflage de l'ensemble, l'adaptateur 100 comporte une couche 128 de composition caoutchouteuse imperméable au gaz.

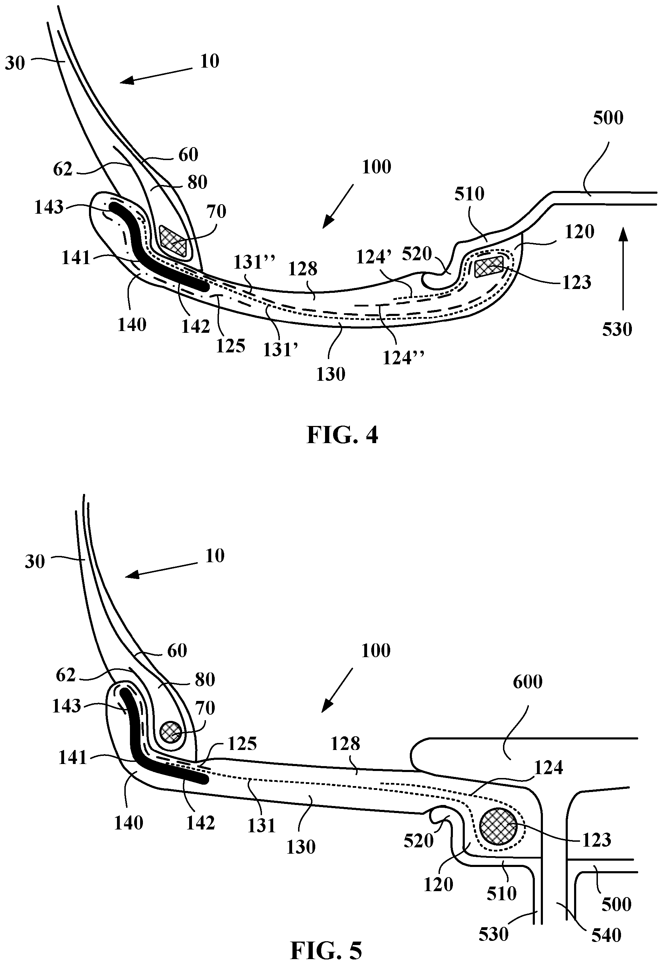

L'ensemble roulant de la figure 4 se distingue de celui de la figure 3 par
- le pneumatique, qui a des bourrelets dont les sièges sont inclinés par rapport à l'axe de rotation de l'ensemble d'un angle égal à 20°, et qui sont renforcés par des tringles de type à fils rectangulaires ;
- la jante de montage 500, qui a une gorge de montage 530 tournée vers l'intérieur de l'ensemble, des sièges 510 inclinés par rapport à l'axe de rotation d'un angle de 15°, les sièges 510 étant prolongés axialement à l'extérieur et radialement vers l'intérieur par des rebords de jante 520 à bords recourbés, la jante recevant les bourrelets de l'adaptateur par l'intérieur ;
- l'adaptateur 100, qui est constitué :
   (a) d'un renfort de logement 141, formé d'un siège 142 incliné par rapport à l'axe de rotation de l'ensemble d'un angle égal à 15° et prolongé axialement et radialement à l'extérieur par un rebord 143, les autres dimensions de ces éléments étant normalisées, que ce soit la hauteur du rebord 143 ou la largeur axiale du siège 142 ;
   (b) d'une armature de renforcement principale formée de deux nappes de câbles textiles 131' et 131" en polyester, parallèles entre eux dans chacune des nappes mais croisés d'une nappe 131' à la suivante 131" en faisant avec la direction circonférentielle de l'ensemble un angle de 45° ; ces nappes sont comme précédemment d'une part accolées axialement à l'intérieur et radialement à l'extérieur aux parois prétraitées du renfort de logement 141 de l'adaptateur 100 et d'autre part ancrées dans chaque bourrelet d'adaptateur 120 à un anneau circonférentiel d'ancrage 123, tel qu'une tringle, pour former des retournements 124' et 124" dont les extrémités sont décalées axialement l'une par rapport à l'autre,
   (c) d'une armature additionnelle complétant l'armature de renforcement principale 131 : du côté du renfort de logement 141 de l'adaptateur 100 est disposée une armature additionnelle 125 formée du même tissu que précédemment d'éléments textiles, cette armature 125 recouvrant partiellement la paroi axialement intérieure puis l'extrémité supérieure puis la paroi axialement extérieure du rebord 143 et enfin partiellement la paroi radialement intérieure du siège 142 pour avoir un bord accolé à la nappe de renforcement principale 131, bord dont l'extrémité est distante du plan médian d'une quantité inférieur à la distance séparant de ce plan l'extrémité axialement intérieure du siège (142) ;
   (d) des couches de composition caoutchouteuse d'une part de protection, et d'autre part sur sa face radialement intérieure par la couche intérieure 128 de composition caoutchouteuse imperméable au gaz.

L'ensemble roulant de la figure 5 se distingue de celui de la figure 3 par la constitution du bourrelet d'adaptateur 120 et par la constitution du système d'accrochage du bourrelet sur la jante de montage 500. Ce système est en effet composé de deux éléments : la jante de montage 500 proprement dite et un serre-bourrelets 600. La jante 500 est formée de deux rebords 520 usuels, prolongés radialement à l'intérieur et axialement à l'intérieur par deux sièges de jante 510 plats, eux-mêmes prolongés radialement vers l'intérieur par deux disques annulaires 530 radiaux présentant entre eux un certain espacement axial. Dans cet espacement viennent se loger les disques 540 radialement mobiles d'au moins trois parties qui, réunies circonférentiellement, forment le plateau du serre-bourrelets 600, plateau dont la largeur axiale est suffisante pour permettre le serrage et le coincement des bourrelets sur les sièges de jante 510. Le plateau peut aussi avantageusement servir de support de la bande de roulement du pneumatique de l'ensemble lorsque le pneumatique roule à pression faible voire nulle. Quant à la constitution du bourrelet d'adaptateur 120, elle est adaptée en ce qui concerne sa composition et sa forme au principe d'accrochage décrit ci-dessus ; en particulier il est avantageux que la armature de renforcement principale 131 de l'adaptateur 100 soit ancrée par enroulement autour d'un anneau 123 en caoutchouc à haut module de compression mais extensible dans le sens circonférentiel. Par ailleurs, du côté du renfort de logement 141 de l'adaptateur 100 est disposée une armature additionnelle 125 formée d'un tissu identique au précédent formé deux couches d'éléments en polyamide aliphatique, parallèles entre eux dans chaque nappe et croisés d'une couche à la suivante en faisant avec la direction circonférentielle un angle de 45° ; cette armature 125 recouvre partiellement la paroi axialement intérieure puis l'extrémité supérieure puis partiellement la paroi axialement extérieure du rebord 143 pour avoir une extrémité située de l'axe de rotation à une distance radiale correspondant au milieu du rebord 143.

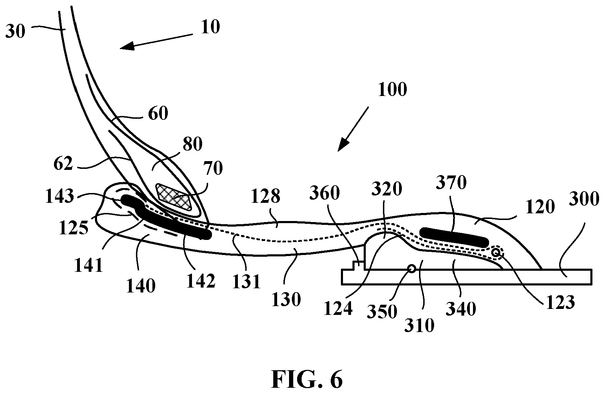

Le dernier exemple d'ensemble roulant conforme à l'invention est montré sur la figure 6. Le pneumatique est identique à celui montré et utilisé dans l'ensemble de la figure 4. La jante de montage est une jante dite à plusieurs pièces, dont au moins deux pièces sont mobiles. Une telle jante est du même genre que les jantes utilisées pour le montage de certains pneumatiques « poids-lourds » et des pneumatiques de « génie-civil ». Cette jante est principalement composée d'un fond de jante 300, qui peut être plat, ce fond de jante 300 étant prolongé d'un seul côté de la jante par un siège conique lui-même prolongé par un cercle ou rebord de jante, siège et rebord étant de ce côté et fixes (non montrés). Du côté axialement opposé, une pièce unique 310 mobile, formée d'un rebord 320 et d'un anneau conique 340, petit être enfilée sur le fond de jante après que le bourrelet d'adaptateur 120 ait été lui-même amené sur le fond de jante. Un joint torique 350, pour assurer l'étanchéité de l'ensemble, et un anneau de verrouillage 360 pour bloquer l'ensemble sur le fond de jante 300, complètent la pièce unique 310. Il est évident que tout bourrelet d'adaptateur 120 de quelque sorte qu'il soit, peut être monté sur une telle jante. L'exemple décrit est relatif à une variante préférentielle où l'armature de renforcement principale 131 de l'adaptateur 100, composée d'une nappe de câbles textiles radiaux, et son retournement 124 sont enserrés entre le siège tronconique de l'anneau mobile 340 et un anneau de renforcement 370 présentant une face radialement intérieure elle-même tronconique, la génératrice de cette face faisant avec l'axe de rotation le même angle que celui que fait la génératrice du siège de l'anneau conique mobile de la pièce unique 310. Le retournement 124 de l'armature de renforcement principale 131 est obtenu par enroulement de cette armature autour d'un anneau circonférentiel 123 possédant une section transversale de faible dimension et une faible résistance à la tension, cet anneau 123 n'étant utilisé que pour parfaire le blocage de l'armature de carcasse entre les deux surfaces tronconiques de l'anneau 370 et du siège de anneau conique 340. Il est possible, en particulier dans le cas de l'utilisation d'une telle jante, de relier les deux adaptateurs gauche et droit par un élément de composition caoutchouteuse simplement vulcanisé et/ou renforcé tout en restant élastique.

Des essais de roulage ont été effectués comparer un ensemble roulant comportant un pneumatique selon la figure 1 du brevet US 6 626 217 à un ensemble roulant comportant un pneumatique correspondant à la figure 3 décrite ci-dessus. Dans les deux cas, le pneumatique était de dimension 225/45 R17.

La capacité de guidage des deux a été comparée de manière subjective dans des tests effectués sur circuit. Le programme d'évaluation comportait des manoeuvres en ligne droite tels que du slalom, des changements de file ou des manoeuvres d'évitement, à des vitesses entre 80 et 120 km/h. Les essayeurs ont donné leurs impressions sans connaître l'architecture de l'ensemble roulant. Ces tests ont permis de constater que l'ensemble roulant selon l'invention guide aussi bien que l'ensemble roulant de référence.

La résistance aux chocs trottoir a été quantifiée en faisant passer les ensembles roulants sur un trottoir de 90 mm de haut avec un angle de 30° par apport a la direction d'avancement du pneumatique ; on effectue des passages successifs a des vitesses différente jusqu'à ce que le pneumatique perde sa pression de gonflage ou se déforme et on fait l'acquisition pour chaque passage des efforts transmis au trottoir.

Le tableau suivant résume les résultats obtenus :

**Tableau I**

| | Capacité de guidage | Résistance aux chocs |
|---|---|---|
| Ensemble de référence | 100 | 100 |
| Ensemble selon l'invention | 120 | 100 |

L'ensemble roulant selon l'invention permet donc d'améliorer de manière très notable le guidage véhicule tout en maintenant une très bonne capacité de résistance au choc.

## Revendications

1. Ensemble roulant comportant :
un pneumatique (10) comportant deux bourrelets (20) ;
une jante de montage (500) dont la largeur est supérieure ou égale à 55 % et inférieure ou égale à 80 % de la largeur axiale maximale du pneumatique gonflé à sa pression de service ; et
au moins un adaptateur (100) qui assure la jonction entre la jante de montage et un bourrelet du pneumatique, ledit adaptateur comportant :
- un bourrelet d'adaptateur (120) assurant l'accrochage de l'adaptateur à la jante de montage (500) ;
- un logement (140) destiné à recevoir le bourrelet du pneumatique (20) et positionné axialement à l'extérieur de la jante de montage (500), le logement comportant un renfort de logement (141) ; et
- un corps de liaison (130) reliant le bourrelet d'adaptateur (120) et le logement, le corps de liaison comportant une armature de renforcement principale (131).

2. Ensemble roulant selon la revendication 1, comportant deux adaptateurs (100) qui assurent la jonction entre la jante de montage (500) et les deux bourrelets (20) du pneumatique (10).

3. Ensemble roulant selon l'une quelconque des revendications 1 ou 2, dans lequel la jante de montage (500) a une gorge de montage (530) tournée vers l'intérieur de l'ensemble, la gorge de montage étant prolongée axialement à l'extérieur par des sièges tronconiques (510) ou plats, les sièges tronconiques (510) étant eux-mêmes prolongés axialement à l'extérieur et radialement vers l'intérieur par des rebords de jante (520) à bords recourbés, la jante recevant les bourrelets de l'adaptateur par l'intérieur.

4. Ensemble roulant selon l'une quelconque des revendications 1 à 3, dans lequel la jante de montage (500) comporte un fond de jante (300) plat, le fond de jante étant, d'un côté axial de la jante, prolongé par un siège conique qui est lui-même prolongé par un cercle ou rebord de jante, le siège conique et le rebord de jante étant fixés de ce côté axial, le fond de jante étant, du côté axialement opposé, complété d'une part par une pièce mobile (310), composée d'un rebord (320) et d'un anneau conique (340) et pouvant être enfilée sur le fond de jante (300), d'autre part par un anneau de verrouillage pour bloquer la pièce mobile sur le fond de jante, et un joint torique (350) assurant l'étanchéité de l'ensemble.

5. Ensemble roulant selon la revendication 1 ou l'une des revendications 3 ou 4, dans lequel l'armature de renforcement principale (131) de l'adaptateur (100) comporte au moins une nappe d'éléments de renforcement radiaux.

6. Ensemble roulant selon la revendication 1 ou selon l'une des revendications 3 à 5, dans lequel l'armature de renforcement principale (131) de l'adaptateur (100) comporte au moins deux nappes (21' et 21") d'éléments de renforcement, parallèles entre eux dans chaque nappe (21', 21") et croisés d'une nappe (21') à la suivante (21") en faisant avec la direction circonférentielle de l'ensemble un angle pouvant être compris entre 15 et 85°.

7. Ensemble roulant selon l'une des revendications 1, 5 ou 6, ou selon l'une des revendications 3 et 4 en dépendance de la revendication 1, dans lequel l'armature de renforcement principale (131) est ancrée dans le bourrelet d'adaptateur (120) par enroulement autour d'un anneau circonférentiel d'ancrage (123), de manière à former un retournement (124).

8. Ensemble roulant selon l'une des revendications 1, 5 ou 6, ou selon l'une des revendications 3 et 4 en dépendance de la revendication 1, dans lequel l'armature de renforcement principale (131) est ancrée dans le bourrelet d'adaptateur (120) par serrage entre les éléments de renforcement circonférentiels d'un anneau circonférentiel d'ancrage (123).

9. Ensemble roulant selon la revendication 7, dans lequel
la jante de montage (500) comporte un siège tronconique (510) ;
le bourrelet (120) de l'adaptateur (100) comporte un anneau de renforcement (370) ayant une face tronconique ; et
l'armature de renforcement principale (131) de l'adaptateur et son retournement (124) sont enserrés entre le siège tronconique de la jante de montage et la face tronconique de l'anneau de renforcement du bourrelet de l'adaptateur.

10. Ensemble roulant selon l'une des revendications 1 ou 5 à 9, ou selon l'une des revendications 4 et 5 en dépendance de la revendication 3, dans lequel
le renfort de logement (141) comporte un rebord (143) ; et
l'armature de renforcement principale (131) de l'adaptateur (100) est réunie au renfort de logement (141) de l'adaptateur par collage sur une face radialement extérieure du logement (20) et axialement à l'intérieur de ce rebord.

11. Ensemble roulant selon l'une des revendications 1 ou 5 à 9, ou selon l'une des revendications 4 et 5 en dépendance de la revendication 3, dans lequel
le renfort de logement (141) comporte un rebord (143) ; et
l'armature de renforcement principale (131) de l'adaptateur (100) est réunie au renfort de logement (141) de l'adaptateur par enroulement sur l'extrémité radialement supérieure de ce rebord.

12. Ensemble roulant selon l'une des revendications 1 ou 5 à 11, ou selon l'une des revendications 4 et 5 en dépendance de la revendication 3, dans lequel l'adaptateur (100) comporte au moins une armature additionnelle (125, 126) renforçant le bourrelet de l'adaptateur (120) et/ou le logement (140) de l'adaptateur (120).

13. Ensemble roulant selon la revendication 12, dans lequel l'armature additionnelle (125, 126) comporte au moins une couche d'éléments de renforcement filaires faisant avec la direction circonférentielle un angle compris entre 10 et 45°.

14. Ensemble roulant selon la revendication 1, comportant un seul adaptateur (100).

## Patentansprüche

1. Rollanordnung, umfassend:
einen Reifen (10) mit zwei Wülsten (20);
eine Montagefelge (500), deren Breite mindestens 55 % und höchstens 80 % der maximalen axialen Breite des auf seinen Betriebsdruck aufgepumpten Reifens beträgt, und
mindestens einen Adapter (100), der den Übergang zwischen der Montagefelge und einer Wulst des Reifens gewährleistet, wobei der Adapter umfasst:
- eine Adapterwulst (120), die das Einhängen des Adapters in die Montagefelge (500) gewährleistet;
- eine Aufnahme (140), die dazu bestimmt ist, die Wulst des Reifens (20) aufzunehmen und axial außen an der Montagefelge (500) angeordnet ist, wobei die Aufnahme eine Aufnahmeverstärkung (141) aufweist, und
- einen Verbindungskörper (130), der die Adapterwulst (120) und die Aufnahme verbindet, wobei der Verbindungskörper eine Hauptverstärkungseinlage (131) umfasst.

2. Rollanordnung nach Anspruch 1, umfassend zwei Adapter (100), die den Übergang zwischen der Montagefelge (500) und den beiden Wülsten (20) des Reifens (10) gewährleisten.

3. Rollanordnung nach einem der Ansprüche 1 oder 2, wobei die Montagefelge (500) eine zum Innern der Anordnung gewandte Montagekehle (530) aufweist, wobei die Montagekehle axial außen durch kegelstumpfartige oder flache Sitze (510) verlängert ist, wobei die kegelstumpfartigen Sitze (510) wiederum axial außen und radial nach innen durch Felgenhörner (520) mit gebogenen Rändern verlängert sind, wobei die Felge die Wülste des Adapters von innen her aufnimmt.

4. Rollanordnung nach einem der Ansprüche 1 bis 3, bei der die Montagefelge (500) ein flaches Felgenbett (300) umfasst, wobei das Felgenbett auf einer axialen Seite der Felge durch einen konischen Sitz verlängert ist, der wiederum durch einen Felgenreifen oder ein Felgenhorn verlängert ist, wobei der konische Sitz und das Felgenhorn auf dieser axialen Seite befestigt sind, wobei das Felgenbett auf der axial entgegengesetzten Seite zum einen um ein mobiles Teil (310) ergänzt wird, das aus einem Rand (320) und aus einem konischen Ring (340) besteht und auf das Felgenbett (300) aufgezogen werden kann, und zum anderen um einen Schließring, um das mobile Teil auf dem Felgenbett zu arretieren, und einen O-Ring (350), der die Dichtheit der Anordnung gewährleistet.

5. Rollanordnung nach Anspruch 1 oder einem der Ansprüche 3 oder 4, wobei die Hauptverstärkungseinlage (131) des Adapters (100) mindestens eine Lage aus radialen Verstärkungselementen umfasst.

6. Rollanordnung nach Anspruch 1 oder nach einem der Ansprüche 3 bis 5, wobei die Hauptverstärkungseinlage (131) des Adapters (100) mindestens zwei Lagen (21' und 21") Verstärkungselemente umfasst, die in jeder Lage (21', 21") parallel zueinander sind und sich von einer Lage (21') zur nächsten (21") überkreuzen, wobei sie mit der Umfangsrichtung der Anordnung einen Winkel bilden, der zwischen 15 und 85° betragen kann.

7. Rollanordnung nach einem der Ansprüche 1, 5 oder 6 oder nach einem der Ansprüche 3 und 4 in Abhängigkeit von Anspruch 1, wobei die Hauptverstärkungseinlage (131) in der Adapterwulst (120) durch Wickeln um einen Verankerungsumfangsring (123) so verankert ist, dass sie einen Umschlag (124) bildet.

8. Rollanordnung nach einem der Ansprüche 1, 5 oder 6 oder nach einem der Ansprüche 3 und 4 in Abhängigkeit von Anspruch 1, wobei die Hauptverstärkungseinlage (131) in der Adapterwulst (120) durch Einklemmen zwischen den Umfangsverstärkungselementen eines Verankerungsumfangsring (123) verankert ist.

9. Rollanordnung nach Anspruch 7, wobei die Montagefelge (500) einen kegelstumpfartigen Sitz (510) umfasst;
die Wulst (120) des Adapters (100) einen Verstärkungsring (370) umfasst, der eine kegelstumpfartige Seite aufweist, und
die Hauptverstärkungseinlage (131) des Adapters und ihr Umschlag (124) zwischen dem kegelstumpfartigen Sitz der Montagefelge und der kegelstumpfartigen Seite des Verstärkungsrings der Wulst des Adapters eingeklemmt sind.

10. Rollanordnung nach einem der Ansprüche 1 oder 5 bis 9 oder nach einem der Ansprüche 4 und 5 in Abhängigkeit von Anspruch 3, wobei die Aufnahmeverstärkung (141) einen Rand (143) umfasst und die Hauptverstärkungseinlage (131) des Adapters (100) mit der Aufnahmeverstärkung (141) des Adapters durch Kleben auf eine radial äußere Seite der Aufnahme (20) und axial im Innern dieses Randes verbunden ist.

11. Rollanordnung nach einem der Ansprüche 1 oder 5 bis 9 oder nach einem der Ansprüche 4 und 5 in Abhängigkeit von Anspruch 3, wobei die Aufnahmeverstärkung (141) einen Rand (143) umfasst und die Hauptverstärkungseinlage (131) des Adapters (100) mit der Aufnahmeverstärkung (141) des Adapters durch Wickeln um das radial obere Ende dieses Randes verbunden ist.

12. Rollanordnung nach einem der Ansprüche 1 oder 5 bis 11 oder nach einem der Ansprüche 4 und 5 in Abhängigkeit von Anspruch 3, wobei der Adapter (100) mindestens eine zusätzliche Einlage (125, 126) umfasst, welche die Wulst des Adapters (120) und/oder die Aufnahme (140) des Adapters (120) verstärkt.

13. Rollanordnung nach Anspruch 12, wobei die zusätzliche Einlage (125, 126) mindestens eine Schicht aus filamentartigen Verstärkungselementen umfasst, die mit der Umfangsrichtung einen Winkel zwischen 10 und 45° bildet.

14. Rollanordnung nach Anspruch 1, umfassend einen einzigen Adapter (100).

## Claims

1. Running set comprising:
a tyre (10) comprising two beads (20);
a mounting rim (500) of which the width is greater than or equal to 55% and less than or equal to 80% of the maximum axial width of the tyre inflated to its service pressure; and
at least one adapter (100) which provides the connection between the mounting rim and a bead of the tyre, said adapter comprising:
- an adapter bead (120) via which the adapter catches on the mounting rim (500);
- a housing (140) intended to accept the bead of the tyre (20) and positioned axially outside the mounting rim (500), the housing comprising a housing reinforcement (141); and
- a connecting body (130) connecting the adapter bead (120) and the housing, the connecting body comprising a main reinforcing reinforcer (131).

2. Running set according to Claim 1, comprising two adapters (100) which provide the connection between the mounting rim (500) and the two beads (20) of the tyre (10).

3. Running set according to either one of Claims 1 and 2, in which the mounting rim (500) has a mounting well (530) facing towards the inside of the set, the mounting well being extended axially on the outside by frustoconically tapered or flat seats (510), the frustoconically tapered seats (510) being themselves extended axially on the outside and radially towards the inside by rim flanges (520) with bent over edges, the rim accepting the beads of the adapter via the inside.

4. Running set according to any one of Claims 1 to 3, in which the mounting rim (500) comprises a flat rim bottom (300), the rim bottom being, on one axial side of the rim, extended by a conically tapered seat which is itself extended by a rim flange or hoop, the conically tapered seat and the rim flange being fixed on its axial side, the rim bottom being, on the axially opposite side, supplemented firstly by a mobile part (310) that is made up of a flange (320) and of a conically tapered ring (340) and can be slipped over the rim bottom (300), and secondly by a locking ring for immobilizing the mobile part on the rim bottom, an O ring (350) sealing the assembly.

5. Running set according to Claim 1 or either of Claims 3 or 4, in which the main reinforcing reinforcer (131) of the adapter (100) comprises at least one ply of radial reinforcing elements.

6. Running set according to Claim 1 or according to one of Claims 3 to 5, in which the main reinforcing reinforcer (131) of the adapter (100) comprises at least two plies (21' and 21") of reinforcing elements that are parallel to one another in each ply (21', 21") and crossed from one ply (21') to the next (21") making with the circumferential direction of the set an angle that may be comprised between 15 and 85°.

7. Running set according to one of Claims 1, 5 or 6, or according to either of Claims 3 and 4 when dependent on Claim 1, in which the main reinforcing reinforcer (131) is anchored in the adapter bead (120) by being wrapped around a circumferential anchoring ring (123) so as to form a turn-up (124).

8. Running set according to one of Claims 1, 5 or 6, or according to either of Claims 3 and 4 when dependent on Claim 1, in which the main reinforcing reinforcer (131) is anchored in the adapter bead (120) by clamping between the circumferential reinforcing elements of a circumferential anchoring ring (123).

9. Running set according to Claim 7, in which
the mounting rim (500) comprises a frustoconically tapered seat (510);
the bead (120) of the adapter (100) comprises a reinforcing ring (370) that has a frustoconically tapered face; and
the main reinforcing reinforcer (131) of the adapter and its turn-up (124) are clamped between the frustoconically tapered seat of the mounting rim and the frustoconically tapered face of the reinforcing ring of the adapter bead.

10. Running set according to one of Claims 1 or 5 to 9, or according to either of Claims 4 and 5 when dependent on Claim 3, in which
the housing reinforcement (141) has a flange (143); and
the main reinforcing reinforcer (131) of the adapter (100) is connected to the housing reinforcement (20) of the adapter by bonding to a radially exterior face (201) of the housing (20) and axially to the inside of this flange.

11. Running set according to one of Claim 1 or 5 to 9, or according to either of Claims 4 and 5 when dependent on Claim 3, in which
the housing reinforcement (141) comprises a flange (143); and
the main reinforcing reinforcer (131) of the adapter (100) is connected to the housing reinforcement (141) of the adapter by being wrapped around the radially upper end of this flange.

12. Running set according to one of Claims 1 or 5 to 11 or according to either of Claims 4 and 5 when dependent on Claim 3, in which the adapter (100) comprises at least one additional reinforcer (125, 126) reinforcing the adapter bead (120) and/or the housing (140) of the adapter (120).

13. Running set according to Claim 12, in which the additional reinforcer (125, 126) comprises at least one layer of filamentary reinforcing elements making with the circumferential direction an angle comprised between 10° and 45°.

14. Running set according to Claim 1, comprising a single adapter (100).
